# FASCICULE DE BREVET EUROPEEN

(11) **EP 1 293 086 B1**
(45) Date de publication et mention de la délivrance du brevet: **23.02.2005**
(21) Numéro de dépôt: 01943593.2
(22) Date de dépôt: 08.06.2001
(51) Int. Cl.: H04M 3/487

(54) **METHODE DE TRANSMISSION D'INFORMATIONS, NOTAMMENT D'INFORMATIONS PUBLICITAIRES, SUR UN TERMINAL D'USAGER**
INFORMATIONSÜBERTRAGUNGSVERFAHREN, INSBESONDERE WERBEINFORMATION ZU EINEM BENUTZERTERMINAL
DATA TRANSMISSION METHOD, IN PARTICULAR ADVERTISING INFORMATION, ON A USER TERMINAL

(30) Priorité: 23.06.2000 FR 0008046
(43) Date de publication de la demande: 19.03.2003
(73) Titulaire: FRANCE TELECOM SA, 75015 Paris (FR)
(72) Inventeur: MESSAGER, Jacques, F-35340 Liffre (FR)
(74) Mandataire: Maillet, Alain
(86) Numéro de dépôt international: PCT/FR2001/001797
(87) Numéro de publication internationale: WO 2001/099396

(56) Documents cités:
- EP-A- 1 003 344
- WO-A-00/35216
- WO-A-96/13928
- WO-A-98/48556
- GB-A- 2 206 265

## Description

La présente invention concerne de manière générale une méthode de transmission d'informations à un terminal d'usager. Plus particulièrement la présente invention concerne une méthode de transmission d'informations publicitaires à un terminal d'usager à partir d'un réseau lui offrant un accès en mode paquet et un accès en mode circuit.

Diverses méthodes de transmission d'informations publicitaires à un terminal d'usager sont connues de l'état de la technique.

Tout d'abord, les techniques de diffusion d'informations publicitaires par Internet sont très répandues. On sait notamment que lorsqu'un usager établit une liaison TCP avec un serveur du Web, le serveur peut utiliser cette liaison pour lui transmettre des informations publicitaires au niveau applicatif. Ces informations sont alors affichées sur son terminal, généralement sous forme de bandeaux. Les informations publicitaires sont par exemple envoyées par le serveur en mode PUSH sur la liaison TCP, c'est-à-dire que les données publicitaires sont remises sans délai à la couche application de l'usager. Selon ce mode de diffusion, les recettes publicitaires sont perçues par les fournisseurs de contenus ou les fournisseurs de services et non par l'opérateur du réseau. En outre la transmission des messages publicitaires perturbe et ralentit la transmission de l'information utile à l'usager.

Il est également connu de la demande WO-A-9834392 de facturer tout ou partie d'une communication entre deux abonnés à un tiers annonceur publicitaire. Selon cette méthode, lorsqu'un abonné veut appeler un autre abonné en bénéficiant d'une tarification réduite, il fait le numéro de son correspondant précédé d'un préfixe déterminé. Lorsque le préfixe est détecté par le réseau, la communication est routée via le serveur de l'annonceur qui peut alors transmettre ses messages publicitaires sur la liaison. En contrepartie, le réseau répercute la facturation à l'annonceur. Cette méthode est complexe car elle nécessite une coupure d'un élément du réseau et un reroutage de la communication. En outre, elle perturbe la communication entre les deux abonnés, quand bien même l'un d'eux n'aurait pas souscrit au service de messagerie publicitaire.

Une méthode de diffusion de messages publicitaires permettant la perception de recettes par l'opérateur du réseau a été proposée dans la demande de certificat d'utilité FR-A-2756695. Selon cette méthode, dès qu'un terminal mobile est mis sous tension, le réseau lui envoie systématiquement un message publicitaire qui s'affiche alors sur l'écran. Cette méthode présente l'inconvénient d'utiliser systématiquement une partie des ressources radio partagées entre les différentes stations mobiles actives et de ne pas cibler les différents usagers. Elle présente également l'inconvénient d'être très ponctuelle puisque l'affichage est limité au temps d'accès au réseau.

On connaît d'autre part le service SMS (Short Message Service) dans le système GSM Ce service permet actuellement d'émettre et de recevoir de courts messages via le réseau de signalisation. Lorsqu'un message est reçu, un témoin s'affiche généralement sur le terminal de l'usager et ce dernier peut alors aller le consulter. Un tel service ne se prête pas à la diffusion de messages publicitaires car il suppose une démarche préalable de l'usager. Il est fait égalemment référence au document WO 98/48556.

Le but de la présente invention est de proposer un procédé de transmission de messages publicitaires qui ne présente pas les inconvénients précités, à savoir qui soit simple à mettre en oeuvre, ne pertube pas la communication de l'abonné, lui délivre directement des messages publicitaires de manière sélective, permanente et permette à l'opérateur de proposer une tarification réduite en contrepartie de la perception de recettes publicitaires.

En outre, un avantage important de la présente invention réside en le fait qu'elle s'applique à tout type de communication : vocale, visiophonique ou encore transfert de données, que cette communication soit réalisée en mode circuit ou en mode paquet.

A cet effet, la méthode selon la présente invention est mise en oeuvre grâce à un réseau de télécommunication offrant aux usagers un accès en mode paquet et un accès en mode circuit et est caractérisée en ce que, lorsqu'au moins une première connexion à travers le réseau est demandée par ledit terminal, selon l'un ou l'autre mode, une seconde connexion en mode paquet est établie, en parallèle avec la première connexion, entre ledit terminal et un serveur d'informations, le serveur transmettant ensuite lesdites informations au terminal d'usager au moyen de la seconde connexion.

Avantageusement, le serveur établit la seconde connexion sur confirmation de l'établissement de la première connexion.

Qui plus est, lorsque le terminal d'usager accède au réseau au moyen d'une pluralité de connexions comprenant la première et la seconde connexions, la seconde connexion est avantageusement libérée lorsque la fin des autres connexions est détectée par le réseau.

Selon une première caractéristique une première base de données est consultée lors de l'établissement de la première connexion et la seconde connexion n'est établie que si la première base de données indique que l'usager est abonné au service d'informations.

Le serveur peut alors sélectionner dans une seconde base de données des informations à transmettre à l'abonné en fonction de caractéristiques de l'abonné, notamment ses préférences, figurant dans une troisième base de données.

Le serveur pourra encore sélectionner dans une banque de données des informations à transmettre à l'abonné en fonction de la localisation de l'abonné.

Selon une seconde caractéristique de l'invention, le serveur sélectionne un format de présentation des informations en fonction du type de terminal d'usager.

Selon une troisième caractéristique de l'invention, les informations sont de type publicitaire et représentées sur le terminal sous forme de bandeaux. Le nombre de clics sur ces bandeaux et/ou le temps d'affichage desdits bandeaux est alors pris en compte pour le calcul de la facturation de la communication sur la ou les connexions autres que la seconde connexion.

Selon une quatrième caractéristique de l'invention, les informations sont transportées au terminal usager sous forme de segments TCP dans lesquels le drapeau de push PSH est levé.

Selon un premier mode d'application, la méthode selon l'invention s'applique à un réseau de télécommunication UMTS.

Selon un second mode d'application, la méthode selon l'invention s'applique à un réseau de télécommunication GSM/GPRS.

Selon un troisième mode d'application, la méthode selon l'invention s'applique à un réseau RNIS.

L'invention concerne également un système adapté à mettre en oeuvre la méthode exposée ci-dessus.

L'invention concerne enfin un logiciel de gestion de service de réseau intelligent, un logiciel de contrôle de serveur et un logiciel de gestion de base de données aptes à mettre en oeuvre la méthode exposée ci-dessus.

Les caractéristiques de l'invention mentionnées ci-dessus, ainsi que d'autres, apparaîtront plus clairement à la lecture de la description suivante faite en relation avec les Figs. jointes.
La Fig. 1 représente de manière schématique le principe général de l'invention ;
La Fig. 2 représente de manière schématique l'architecture d'un système GPRS /GSM ou d'un système UMTS dans lequel est mis en oeuvre un mode de réalisation de l'invention.

L'invention s'applique de manière générale à un réseau pouvant offrir à un terminal d'usager et notamment un terminal mobile à la fois un accès en mode circuit et un accès en mode paquet. On rappelle que pour une connexion de type circuit une partie de la ressource de transmission est réservée pour la durée d'une communication : ce peut être par exemple une fréquence, une ligne, une tranche dans une trame physique etc. A contrario, dans une connexion en mode paquet, l'usager accède à la ressource seulement lorsqu'il a des données à transmettre et par conséquent seul un circuit virtuel est établi entre les entités en communication. Classiquement, la connexion en mode circuit est adaptée aux communications vocales alors que la connexion en mode paquet est préférée pour le trafic de données par salves tel que celui des datagrammes IP (Internet Protocol) ou des paquets X25.

Le système GSM, qui n'offre que des accès en mode circuit, a été adapté dans le standard GPRS (General Packet Radio Service) pour supporter également des accès en mode paquet. D'autre part, le système de téléphonie mobile de troisième génération (UMTS) offrira également les deux types de connexion. L'usager du système GPRS (s'il dispose d'un terminal mobile dit de classe A) ou du système UMTS pourra établir simultanément une connexion en mode circuit, par exemple pour une conversation téléphonique, et une connexion en mode paquet, par exemple pour chercher des informations sur un site de l'Internet. De même le réseau RNIS permet l'établissement d'une connexion en mode circuit sur le canal B en parallèle avec une connexion en mode paquet sur le canal D

Selon la méthode de la présente invention, lorsqu'un usager émet un appel pour établir une connexion en mode circuit ou en mode paquet, le réseau vérifie si l'usager appelant ou l'usager appelé est abonné à un service de messagerie publicitaire. Si c'est le cas, le réseau adresse une indication d'appel au serveur publicitaire avec les références de l'usager concerné, à savoir son numéro d'appelant ou d'appelé, son type de terminal, ses identifiants de tarification, ses caractéristiques d'accès etc.

Le serveur, après avoir vérifié les droits d'accès de l'usager au service de messagerie et recherché dans sa base de données ses préférences publicitaires, établit un circuit virtuel avec le terminal de l'usager abonné et lui transmet des informations publicitaires correspondant à ses préférences et/ou à sa localisation. Pour ce faire, le serveur utilisera avantageusement la transmission en mode push du protocole TCP qui permettra d'envoyer sans délai ses données à la couche application de l'usager. Les informations publicitaires sont transmises à partir de la base de données publicitaires du serveur et se présentent sous un format dépendant du terminal utilisé par l'usager, par exemple sous forme de bandeaux publicitaires si la taille d'écran du terminal le permet.

Les ressources utilisées pour le circuit virtuel sont prises dans la bande passante disponible souscrite par l'usager ou bien encore fixées par l'opérateur du réseau afin de garantir une qualité de service minimale (Best Effort). Dans les deux cas, la transmission des informations publicitaires se fait sur un circuit virtuel indépendant et parallèle à la première connexion, de sorte que la communication sur cette dernière n'est en rien perturbée.

Les informations publicitaires affichées peuvent contenir des références à des sites Internet ou à d'autres informations publicitaires. L'usager abonné naviguera par exemple de bandeau en bandeau publicitaire. Le cas échéant, le serveur effectuera un reroutage de l'appel vers l'adresse URL attachée au bandeau publicitaire. Le nombre d'informations publicitaires ainsi consultées, leur temps total d'affichage et de manière générale les statistiques de consultation seront obtenus par le serveur à partir du nombre de fois que l'usager abonné aura cliqué sur ces bandeaux et de la durée de la connexion. L'opérateur du réseau percevant des recettes publicitaires grâce à ce service pourra offrir une tarification de communication favorable à l'usager abonné.

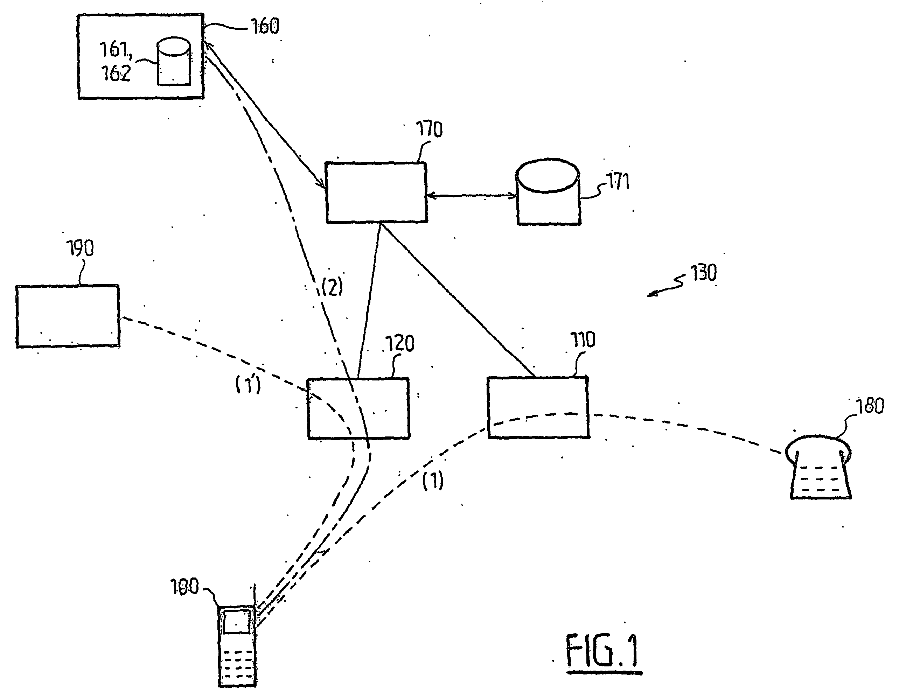

La Fig. 1 illustre le principe général de l'invention. Lorsqu'un usager demande au travers de son terminal (100) l'établissement d'une première communication au moyen d'une connexion en mode circuit (1) avec un autre usager (180) ou une connexion en mode paquet (1') avec, par exemple, pour l'Internet, une adresse URL (190), le système de gestion de service (170) est averti de cette demande. Le système de gestion (170) vérifie alors dans la base de données (171) contenant les informations relatives aux usagers si l'appelant (100) ou l'appelé (180, 190) est abonné au service de diffusion d'informations. Dans l'affirmative, le système de gestion de service active le serveur (160) et lui fournit les données utiles à l'établissement d'une connexion (2) en mode paquet avec l'abonné (supposé être ici l'appelant). Le serveur transmet alors à l'abonné, sur la seconde connexion, les informations pertinentes stockées dans la base de données (161) en fonction de caractéristiques de l'abonné, par exemple ses préférences, stockées dans la base de données (162) ainsi que de sa localisation. Les informations peuvent notamment être transmises sous forme de paquets IP en mode PUSH. Avantageusement le serveur indiquera à l'abonné par exemple au moyen d'un message spécifique la position de la fenêtre de visualisation des informations sur le terminal de l'usager. La seconde connexion (2) est établie en parallèle avec la première connexion ((1),(1')) dès confirmation de l'établissement de la première connexion (confirmation d'appel). L'usager a la possibilité d'établir de nouvelles connexions à partir de son terminal (100). Lorsque la première connexion ou de manière plus générale lorsque toutes les connexions hors la connexion avec le serveur (160) sont libérées, le système de gestion (170) en est averti. Il en informe alors le serveur (160) qui libère la seconde connexion (2).

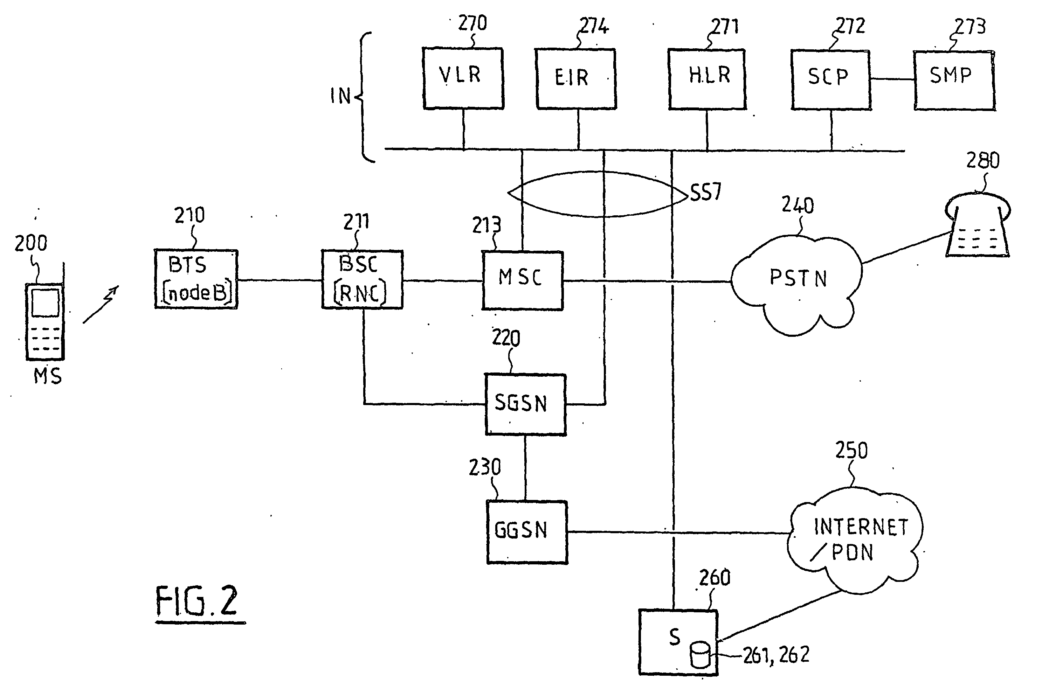

La Fig. 2 montre la mise en oeuvre d'un mode de réalisation de l'invention dans le cadre d'un réseau GSM/GPRS ou d'un réseau UMTS. Les acronymes entre crochets se réfèrent au système UMTS lorsque celui-ci diffère du système GSM/GPRS. Le fonctionnement de l'invention étant analogue pour les deux réseaux, la description sera faite pour ce dernier et seules les différences seront indiquées lorsque nécessaire.

Nous supposerons que l'usager dispose d'un terminal (200) par exemple d'une station mobile (MS) couplée ou non à un ordinateur personnel (non représenté). La station mobile est servie par une station de base comprenant un émetteur/récepteur BTS (210) ou Base Transceiver Station (node B dans le système UMTS), contrôlé par le contrôleur BSC (211) ou Base Station Controller (RNC ou Radio Network Controller dans le système UMTS) recevant des informations de contrôle du noeud (220) en mode paquet et du noeud (213) en mode circuit. Le contrôleur (211) gère en particulier les canaux de l'interface radio et l'itinérance (handovers) des mobiles entrant et sortant de la cellule. Les canaux peuvent être soit réservés pour des connexions en mode circuit soit partagés pour des connexions en mode paquet. L'ensemble constitué de BTS (node B) et BSC (RNC) forme un sous-système de station de base encore appelé BSS, Base Station Subsystem (RNS pour Radio Network System). Le contrôleur (211) est connecté à un commutateur MSC (213) ou Mobile Switch Center du réseau GSM classique par qui transitent les communications en mode circuit vers le réseau public commuté (240) (PSTN pour Public Switched Telephone Network).

Le contrôleur (211) est également connecté à un noeud SGSN de service GPRS (Serving GPRS Support Node) par qui transitent les communications en mode paquet. La connexion à un réseau de transport en mode paquet (PDN) ou à l'Internet est réalisée par une passerelle GGSN (230) ou Gateway Support Node. Un serveur d'informations publicitaires (260) disposant d'une base de données (261) est connecté à ce réseau. Le commutateur MSC, le noeud de service SGSN ainsi que le serveur d'informations publicitaires sont reliés par le réseau de signalisation (SS7) conforme à la Recommendation CCITT n°7, à la base de données VLR (270) (Visitor Location Register) , à la base de données HLR (271) (Home Location Register), à la base de données EIR (274) (Equipment Interface Register) ainsi qu'à à un point (272) de contrôle des services SCP (Service Control Point) pouvant s'adresser à un organe spécialisé SMP (273) ou Service Management Point chargé de l'administration du service. La base de données VLR contient des informations relatives à toutes les stations mobiles de passage dans sa zone de service et la base de données HLR contient les informations permanentes de l'usager comme par exemple son identification internationale d'abonné, IMSI (International Mobile Subscriber Identity). La base de données EIR contient quant à elle les informations relatives à l'équipement de l'usager comme par exemple l'identification internationale de son équipement, IMEI (International Mobile Equipment Identity).

Lorsqu'un usager demande l'établissement d'une communication (ou encore qu'une nouvelle application est lancée sur le terminal), le mode de connexion requis est déterminé par le contrôleur BSC en fonction du type de communication (ou d'application) demandée. Le commutateur MSC ou le noeud SGSN, selon le cas, signalent la demande d'appel et les contrôles d'usage sont effectués dans la base de données HLR. Le point de contrôle de service (SCP) vérifie ensuite si l'usager est abonné au service de messagerie publicitaire et, dans l'affirmative, le gestionnaire de service (SMP) envoie par le réseau sémaphore SS7, des informations au serveur (260) de messagerie publicitaire pour établir une connexion en mode paquet avec l'abonné. Le serveur dispose d'une base de données (261) des usagers abonnés contenant, pour chaque abonné, les références de l'usager, ses droits d'accès, ses préférences publicitaires, ses temps de connexion aux URL associées aux bandeaux publicitaires et de manière plus générale toute information pertinente sur son profil d'abonné ou sur son utilisation du service. Cette base de données peut être constituée à partir de renseignements fournis par l'usager client lors de son abonnement au service complétés par les informations déjà présentes dans la base de données HLR. Le serveur peut également obtenir à partir du fichier VLR la localisation actuelle de l'usager si ce dernier a également souscrit au service de localisation. Après avoir vérifié ses droits d'accès, le serveur sélectionne alors, en fonction des préférences publicitaires et/ou de la localisation de l'abonné, des informations à partir de la base de données publicitaires (262), sous un format adapté à l'affichage sur le terminal. Le type de terminal est connu du serveur à partir du numéro IMEI, disponible dans la base de données EIR et des informations éventuelles de mise à jour. La fréquence de transmission des informations publicitaires est choisie par l'usager abonné ou bien est déterminée par l'opérateur du réseau. Elles sont envoyées de préférence sous forme de paquets IP en mode push de sorte qu'elles sont transmises sans délai au niveau de l'application et s'affichent directement sur l'écran dans une zone réservée. Les informations publicitaires peuvent offrir des menus ou des liens hypertexte qui renvoient soit vers d'autres informations publicitaires de la base de données soit encore vers les sites des annonceurs. Toutes les informations de sélection et de navigation sont exploitées par le serveur pour mettre à jour ses bases de données et fournir à l'opérateur de réseau les éléments nécessaires permettant de calculer le taux de réduction applicable à la communication.

Bien entendu, le service de messagerie publicitaire n'est pas limité à l'usager abonné appelant. Si l'usager appelé est également abonné ou bien s'il est le seul abonné, le serveur pourra lui transmettre des informations publicitaires selon la procédure vue plus haut. Bien que n'ayant pas a priori la communication à sa charge, l'appelé capitalisera ainsi du temps d'utilisation du service publicitaire, ce qui lui permettra de bénéficier d'une tarification favorable sur une communication ultérieure.

L'abonné aura le loisir en émettant un code particulier de ne pas ou de ne plus recevoir d'informations publicitaires au cours d'une communication. Dans ce cas, le serveur prend en compte l'événement pour la facturation et renvoie un acquittement de fin de connexion. De même lorsque la première communication prend fin, le serveur en est averti par le gestionnaire de service SMP et termine aussitôt la connexion avec l'abonné. Si l'abonné a établi plusieurs communications, c'est la fin de la dernière communication active qui déclenche la rupture de la communication avec le serveur.

Bien que l'invention ait été illustrée dans son application aux réseaux GSM/GPRS et UMTS, elle s'applique, comme on l'a vu, à tout réseau de télécommunication susceptible d'offrir une connexion en mode circuit et une connexion en mode paquet en parallèle. Par exemple, l'invention s'appliquera au réseau RNIS offrant une connexion en mode circuit sur un canal B et une connexion en mode paquet sur le canal D.

De même, bien que la description ci-dessus ait essentiellement présenté un serveur d'informations publicitaires, l'invention ne se limite pas à ce type d'informations. Elle peut permettre de diffuser notamment des informations réseau, des informations sur la circulation, des histoires drôles, des videogags ou autres. L'usager abonné se libère ainsi de la phase de connexion pour ce ou ces types d'informations. La présentation sur l'écran de l'usager ne se limite pas non plus à des bandeaux, elle peut se faire de manière générale sous forme de textes, d'images ou de données multimedia.

## Revendications

1. Méthode de transmission d'informations, notamment d'informations publicitaires, à un terminal d'usager (100, 200) pouvant accéder à un réseau de télécommunication grâce à un accès en mode paquet et un accès en mode circuit, **caractérisée en ce que**, lorsqu'une première connexion ((1),(1')) à travers le réseau est demandée par ledit terminal selon l'un ou l'autre mode, une seconde connexion en mode paquet (2) est établie, en parallèle avec la première connexion, entre ledit terminal et un serveur d'informations (160, 260), le serveur transmettant ensuite lesdites informations au terminal d'usager au moyen de la seconde connexion.

2. Méthode de transmission d'informations selon la revendication 1 **caractérisée en ce que** le serveur établit la seconde connexion sur confirmation d'établissement de la première connexion.

3. Méthode de transmission d'informations selon la revendication 1 ou 2, **caractérisée en ce que**, le terminal d'usager accédant au réseau au moyen d'une pluralité de connexions comprenant la première et la seconde connexions, le serveur libère la seconde connexion lorsque la fin des autres connexions est détectée par le réseau.

4. Méthode de transmission d'informations selon l'une des revendications 1 à 3, **caractérisée en ce qu'**une première base de données (171, 270, 271) est consultée lors de l'établissement de la première connexion et que la seconde connexion n'est établie que si ladite base de données indique que l'usager est abonné au service d'informations.

5. Méthode de transmission d'informations selon la revendication 4, **caractérisée en ce que** le serveur sélectionne dans une seconde base de données (162, 262) des informations à transmettre à l'abonné en fonction de caractéristiques de l'abonné figurant dans une troisième base de données (161, 261).

6. Méthode de transmission d'informations selon la revendication 5, **caractérisée en ce que** lesdites caractéristiques comprennent les préférences de l'abonné.

7. Méthode de transmission d'informations selon la revendication 5 ou 6, **caractérisée en ce que** le serveur sélectionne dans la seconde base de données des informations à transmettre à l'abonné en fonction de la localisation de l'abonné.

8. Méthode de transmission d'informations selon l'une des revendications précédentes, **caractérisée en ce que** le serveur sélectionne un format de présentation des informations en fonction du type de terminal d'usager.

9. Méthode de transmission d'informations selon la revendication 8, **caractérisée en ce que** le serveur indique au terminal d'usager une position d'affichage desdites informations sur son écran.

10. Méthode de transmission d'informations selon l'une des revendications précédentes, **caractérisée en ce que**, les informations étant de type publicitaire et représentées sur le terminal sous forme de bandeaux, le nombre de clics sur ces bandeaux et/ou le temps d'affichage desdits bandeaux est pris en compte pour le calcul de la facturation de la communication sur la ou les connexions autres que la seconde connexion.

11. Méthode de transmission d'informations selon l'une des revendications précédentes, **caractérisée en ce que** lesdites informations sont transportées au terminal usager sous forme de segments TCP dans lesquels le drapeau de push PSH est levé.

12. Méthode de transmission d'informations selon l'une des revendications précédentes **caractérisée en ce que** le réseau de télécommunication est un réseau UMTS.

13. Méthode de transmission d'informations selon l'une des revendications 1 à 12 **caractérisée en ce que** le réseau de télécommunication est un réseau GSM/GPRS.

14. Méthode de transmission d'informations selon l'une des revendications 1 à 11 **caractérisée en ce que** le réseau de télécommunication est un réseau RNIS.

15. Système de transmission d'informations, notamment d'informations publicitaires, à un terminal d'usager (100, 200) au moyen d'un réseau de télécommunication offrant un accès en mode paquet et un accès en mode circuit, le système comprenant des moyens de gestion de service (170, 272, 273) et un serveur d'informations (160), le système étant **caractérisé en ce que** les moyens de gestion de service sont adaptés à recevoir du terminal d'usager une demande de connexion selon l'un ou l'autre mode et que ledit serveur est adapté à établir une seconde connexion en mode paquet, en parallèle avec la première connexion, avec ledit terminal, ledit serveur étant adapté à transmettre ensuite lesdites informations audit terminal au moyen de la seconde connexion.

16. Système de transmission d'informations selon la revendication 15, **caractérisé en ce que** les moyens de gestion de service (170, 272, 273) sont adaptés à fournir au serveur (160) les éléments d'information lui permettant d'établir la seconde connexion sur confirmation d'établissement de la première connexion.

17. Système de transmission d'informations selon la revendication 15 ou 16, **caractérisé en ce que**, le terminal d'usager accédant audit réseau au moyen d'une pluralité de connexions comprenant la première et la seconde connexions, les moyens de gestion de service sont adaptés à fournir au serveur les éléments d'information lui permettant de libérer la seconde connexion lorsque la fin des autres connexions leur est signalée.

18. Système de transmission d'informations selon l'une des revendications 16 ou 17, **caractérisé en ce qu'**il comprend en outre une première base de données (171, 270, 271), les moyens de gestion de service étant adaptés à consulter la première base de données et à ne fournir lesdits éléments d'information au serveur que si la première base de données indique que l'usager est abonné au service d'informations.

19. Système de transmission d'informations selon l'une des revendications 15 à 18, **caractérisé en ce que** le serveur (160, 260) comprend une seconde base de données (162, 262) contenant des informations à transmettre aux abonnés et une troisième base de données (161, 261) contenant des caractéristiques de l'abonné.

20. Système de transmission d'informations selon la revendication 19, **caractérisé en ce que** lesdites caractéristiques comprennent les préférences des abonnés.

21. Système de transmission d'informations selon l'une des revendications 19 ou 20, **caractérisé en ce que** les moyens de gestion de service sont adaptés à fournir au serveur une information de localisation de l'usager et que le serveur est adapté à sélectionner dans la seconde base de données des informations à transmettre à l'abonné en fonction de ladite information de localisation.

22. Système de transmission d'informations selon l'une des revendications 15 à 21, **caractérisé en ce que** le serveur est adapté à sélectionner un format de présentation des informations en fonction du type de terminal d'usager.

23. Système de transmission d'informations selon la revendication 22, **caractérisé en ce que** le serveur indique au terminal d'usager une position d'affichage desdites informations sur son écran.

24. Logiciel de gestion d'un service de réseau intelligent, **caractérisé en ce que**, lorsqu'il est exécuté par un processeur, est apte à faire fonctionner les moyens de gestion de service du système de transmission selon l'une des revendications 15 à 18 ou 21.

25. Logiciel de contrôle de serveur d'informations, **caractérisé en ce que**, lorsqu'il est exécuté par un processeur, est apte à faire fonctionner le serveur du système de transmission selon l'une des revendications 15 à 17.

26. Logiciel de gestion de base de données d'un serveur d'informations, **caractérisé en ce que**, lorsqu'il est exécuté par un processeur, est apte à exécuter les étapes de la méthode selon l'une des revendications 5 à 10.

## Patentansprüche

1. Informationsübertragungsverfahren, insbesondere für Werbeinformationen zu einem Benutzerterminal (100, 200), das auf ein Telekommunikationsnetz dank eines Zugangs im Paketmodus und eines Zugangs im Schaltungsmodus zugreifen kann, **dadurch gekennzeichnet, dass**, wenn ein erster Anschluss ((1), (1')) über das Netz von dem Terminal nach dem einen oder anderen Modus angefordert wird, ein zweiter Anschluss (2) im Paketmodus parallel mit dem ersten Anschluss zwischen dem Terminal und einem Informationsserver (160, 260) hergestellt wird, wobei der Server dann die Informationen an das Benutzerterminal mit Hilfe des zweiten Anschlusses überträgt.

2. Informationsübertragungsverfahren nach Anspruch 1, **dadurch gekennzeichnet, dass** der Server den zweiten Anschluss bei Bestätigung der Herstellung des ersten Anschlusses herstellt.

3. Informationsübertragungsverfahren nach Anspruch 1 oder 2, **dadurch gekennzeichnet, dass**, wenn das Benutzerterminal auf das Netz mit Hilfe einer Vielzahl von Anschlüssen umfassend den ersten und den zweiten Anschluss zugreift, der Server den zweiten Anschluss freigibt, wenn das Ende der anderen Anschlüsse durch das Netz erfasst wird.

4. Tnformationsübertragungsmethode nach einem der Ansprüche 1 bis 3, **dadurch gekennzeichnet, dass** eine erste Datenbasis (171, 270, 271) bei der Herstellung des ersten Anschlusses konsultiert wird, und dass der zweite Anschluss nur hergestellt wird, wenn die Datenbasis angibt, dass der Benutzer Anschlussinhaber des Informationsdienstes ist.

5. Informationsübertragungsverfahren nach Anspruch 4, **dadurch gekennzeichnet, dass** der Server in einer zweiten Datenbasis (162, 262) Informationen, die an den Anschlussinhaber zu übertragen sind, in Abhängigkeit von Merkmalen des Anschlussinhabers, die sich in einer dritten Datenbasis (161, 261) befinden, auswählt.

6. Informationsübertragungsverfahren nach Anspruch 5, **dadurch gekennzeichnet, dass** die Merkmale die Vorlieben des Anschlussinhabers umfassen.

7. Informationsübertragungsverfahren nach Anspruch 5 oder 6, **dadurch gekennzeichnet, dass** der Server in der zweiten Datenbasis Informationen, die an den Anschlussinhaber zu übertragen sind, in Abhängigkeit von der Lokalisierung des Anschlussinhabers auswählt.

8. Informationsübertragungsverfahren nach einem der vorhergehenden Ansprüche, **dadurch gekennzeichnet, dass** der Server ein Darstellungsformat der Informationen in Abhängigkeit vom Typ des Benutzerterminals auswählt.

9. Informationsübertragungsverfahren nach Anspruch 8, **dadurch gekennzeichnet, dass** der Server dem Benutzerterminal eine Position für die Anzeige der Informationen auf seinem Bildschirm angibt.

10. Informationsübertragungsmethode nach einem der vorhergehenden Ansprüche, **dadurch gekennzeichnet, dass**, da die Informationen vom Werbetyp sind und auf dem Terminal von Form von Bändern dargestellt werden, die Anzahl von Klicks auf diese Bänder und/oder die Anzeigezeit dieser Bänder für die Berechnung der Fakturierung der Kommunikation auf dem oder den Anschlüssen mit Ausnahme des zweiten Anschlusses berücksichtigt werden.

11. Informationsübertragungsverfahren nach einem der vorhergehenden Ansprüche, **dadurch gekennzeichnet, dass** die Informationen an das Benutzerterminal in Form von TCP-Segmenten weitergeleitet werden, in denen das Push-Zeichen PSH aufgehoben ist.

12. Informationsübertragungsverfahren nach einem der vorhergehenden Ansprüche, **dadurch gekennzeichnet, dass** das Telekommunikationsnetz ein UMTS-Netz ist.

13. Informationsübertragungsverfahren nach einem der Ansprüche 1 bis 12, **dadurch gekennzeichnet, dass** das Telekommunikationsnetz ein GSM/GPRS-Netz ist.

14. Informationsübertragungsverfahren nach einem der Ansprüche 1 bis 11, **dadurch gekennzeichnet, dass** das Telekommunikationsnetz ein RNIS-Netz ist.

15. Informationsübertragungsverfahren, insbesondere für Werbeinformationen, zu einem Benutzerterminal (100, 200) mit Hilfe eines Telekommunikationsnetzes, das einen Zugang im Paketmodus und einen Zugang im Schaltungsmodus bietet, wobei das System Dienststeuerungsmittel (170, 272, 273) und einen Informationsserver (160) umfasst, wobei das System **dadurch gekennzeichnet ist, dass** die Dienststeuerungsmittel derart ausgeführt sind, dass sie vom Benutzerterminal eine Anschlussanforderung nach dem einen oder dem anderen Modus empfangen, und **dadurch gekennzeichnet ist, dass** der Server derart ausgeführt ist, dass er einen zweiten Anschluss im Paketmodus parallel zum ersten Anschluss mit dem Terminal herstellt, wobei der Server derart ausgeführt ist, dass er dann die Informationen an das Terminal mit Hilfe des zweiten Anschlusses überträgt.

16. Informationsübertragungssystem nach Anspruch 15, **dadurch gekennzeichnet, dass** die Dienststeuerungsmittel (170, 272, 273) derart ausgeführt sind, dass sie an den Server (160) die Informationselemente liefern, die es ihm ermöglichen, den zweiten Anschluss bei Bestätigung der Herstellung des ersten Anschlusses herzustellen.

17. Informationsübertragungssystem nach Anspruch 15 oder 16, **dadurch gekennzeichnet, dass**, da das Benutzerterminal auf das Netz mit Hilfe einer Vielzahl von Anschlüssen umfassend den ersten und den zweiten Anschluss zugreift, die Dienststeuerungsmittel derart ausgeführt sind, dass sie an den Server die Informationselemente liefern, die es ihm ermöglichen, den zweiten Anschluss freizugeben, wenn ihnen das Ende der anderen Anschlüsse angezeigt wird.

18. Informationsübertragungssystem nach einem der Ansprüche 16 oder 17, **dadurch gekennzeichnet, dass** es ferner eine erste Datenbasis (171, 270, 271) umfasst, wobei die Dienststeuerungsmittel derart ausgeführt sind, dass sie die erste Datenbasis konsultieren und die Informationselemente an den Server nur dann liefern, wenn die erste Datenbasis angibt, dass der Benutzer Anschlussinhaber des Informationsdienstes ist.

19. Informationsübertragungssystem nach einem der Ansprüche 15 bis 18, **dadurch gekennzeichnet, dass** der Server (160, 260) eine zweite Datenbasis (162, 262), die an die Anschlussinhaber zu übertragende Informationen enthält, und eine dritte Datenbasis (161, 261) umfasst, die Merkmale des Anschlussinhabers umfasst.

20. Informationsübertragungssystem nach Anspruch 19, **dadurch gekennzeichnet, dass** die Merkmale die Vorlieben des Anschlussinhabers umfassen.

21. Informationsübertragungssystem nach einem der Ansprüche 19 oder 20, **dadurch gekennzeichnet, dass** die Dienststeuerungsmittel an den Server eine Information über die Lokalisierung des Benutzers liefern können, und dass der Server derart ausgeführt ist, dass er in der zweiten Datenbasis an den Anschlussinhaber zu übertragende Informationen in Abhängigkeit von der Lokalisierungsinformation auswählt.

22. Informationsübertragungssystem nach einem der Ansprüche 15 bis 21, **dadurch gekennzeichnet, dass** der Server derart ausgeführt ist, dass er ein Darstellungsformat der Informationen in Abhängigkeit vom Typ des Benutzerterminals auswählt.

23. Informationsübertragungssystem nach Anspruch 22, **dadurch gekennzeichnet, dass** der Server dem Benutzerterminal eine Position für die Anzeige der Informationen auf seinem Bildschirm angibt.

24. Software zur Steuerung eines intelligenten Netzdienstes, **dadurch gekennzeichnet, dass** sie, wenn sie von einem Prozessor ausgeführt wird, die Dienststeuerungsmittel des Übertragungssystems nach einem der Ansprüche 15 bis 18 oder 21 funktionieren lassen kann.

25. Kontrollsoftware eines Informationsservers, **dadurch gekennzeichnet, dass** sie, wenn sie von einem Prozessor ausgeführt wird, den Server des Übertragungssystems nach einem der Ansprüche 15 bis 17 funktionieren lassen kann.

26. Steuerungssoftware einer Datenbasis eines Informationsservers, **dadurch gekennzeichnet, dass** sie, wenn sie von einem Prozessor ausgeführt wird, die Schritte des Verfahrens nach einem der Ansprüche 5 bis 10 ausführen kann.

## Claims

1. Method for transmission of information, in particular advertising information, to a user terminal (100, 200) capable of accessing a telecommunications network by virtue of access in packet mode and access in circuit mode, **characterised in that** when a first connection ((1), (1')) through the network is requested by said terminal in one or other mode, a second connection in packet mode (2) is established, in parallel with the first connection, between said terminal and an information server (160, 260), the server then transmitting said information to the user terminal by means of the second connection.

2. Method for transmission of information according to claim 1, **characterised in that** the server establishes the second connection on confirmation of the establishment of the first connection.

3. Method for transmission of information according to claim 1 or 2, **characterised in that**, with the user terminal accessing the network by means of a plurality of connections comprising the first and the second connections, the server releases the second connection when the end of the other connections is detected by the network.

4. Method for transmission of information according to one of claims 1 to 3, **characterised in that** a first database (171, 270, 271) is consulted when the first connection is established and **in that** the second connection is only established if said database indicates that the user subscribes to the information service.

5. Method for transmission of information according to claim 4, **characterised in that** the server selects information to be transmitted to the subscriber from a second database (162, 262) as a function of characteristics of the subscriber appearing in a third database (161, 261).

6. Method for transmission of information according to claim 5, **characterised in that** said characteristics comprise the preferences of the subscriber.

7. Method for transmission of information according to claim 5 or 6, **characterised in that** the server selects information to be transmitted to the subscriber from the second database as a function of the location of the subscriber.

8. Method for transmission of information according to one of the preceding claims, **characterised in that** the server selects a format for presentation of the information as a function of the type of user terminal.

9. Method for transmission of information according to claim 8, **characterised in that** the server indicates to the user terminal a position for displaying said information on its screen.

10. Method for transmission of information according to one of the preceding claims, **characterised in that**, with the information being of advertising type and shown on the terminal in the form of strips, the number of clicks on these strips and/or the display time of said strips is taken into account for calculation of the billing for the communication over the connection or connections other than the second connection.

11. Method for transmission of information according to one of the preceding claims, **characterised in that** said information is transported to the user terminal in the form of TCP segments in which the PSH push flag is raised.

12. Method for transmission of information according to one of the preceding claims, **characterised in that** the telecommunications network is a UMTS network.

13. Method for transmission of information according to one of claims 1 to 12, **characterised in that** the telecommunications network is a GSM/GPRS network.

14. Method for transmission of information according to one of claims 1 to 11, **characterised in that** the telecommunications network is an RNIS network.

15. System for transmission of information, in particular advertising information, to a user terminal (100, 200) by means of a telecommunications network offering access in packet mode and access in circuit mode, the system comprising service management means (170, 272, 273) and an information server (160), the system being **characterised in that** the service management means are adapted to receive a request for connection in one or other mode from the user terminal and **in that** said server is adapted to establish a second connection in packet mode, in parallel with the first connection, with said terminal, said server being adapted to then transmit said information to said terminal by means of the second connection.

16. System for transmission of information according to claim 15, **characterised in that** the service management means (170, 272, 273) are adapted to supply the server (160) the information elements enabling it to establish the second connection on confirmation of the establishment of the first connection.

17. System for transmission of information according to claim 15 or 16, **characterised in that**, the user terminal accessing said information by means of a plurality of connections comprising the first and the second connections, the service management means are adapted to supply the server the information elements enabling it to release the second connection when the end of the other connections is signalled to them.

18. System for transmission of information according to one of claims 16 or 17, **characterised in that** it additionally comprises a first database (171, 270, 271), the service management means being adapted to consult the first database and only supply said information elements to the server if the first database indicates that the user subscribes to the information service.

19. System for transmission of information according to one of claims 15 to 18, **characterised in that** the server (160, 260) comprises a second database (162, 262) containing information to be transmitted to the subscribers and a third database (161, 262) containing characteristics of the subscriber.

20. System for transmission of information according to claim 19, **characterised in that** said characteristics comprise the preferences of the subscribers.

21. System for transmission of information according to one of claims 19 or 20, **characterised in that** the service management means are adapted to supply the server information for location of the user and **in that** the server is adapted to select information to be transmitted to the subscriber from the second database as a function of said location information.

22. System for transmission of information according to one of claims 15 to 21, **characterised in that** the server is adapted to select a format for presentation of the information as a function of the type of user terminal.

23. System for transmission of information according to claim 22, **characterised in that** the server indicates to the user terminal a position for displaying said information on its screen.

24. Software for management of an intelligent network service, **characterised in that**, when it is run by a processor, it is suitable for operating the service management means of the transmission system according to one of claims 15 to 18 or 21.

25. Software for control of an information server, **characterised in that**, when it is run by a processor, it is suitable for operating the server of the transmission system according to one of claims 15 to 17.

26. Software for management of a database of an information server, **characterised in that**, when it is run by a processor, it is suitable for carrying out the steps of the method according to one of claims 5 to 10.
